# EUROPEAN PATENT SPECIFICATION

(11) **EP 1 598 723 B1**
(45) Date of publication and mention of the grant of the patent: **24.07.2013**
(21) Application number: 05104121.8
(22) Date of filing: 17.05.2005
(51) Int. Cl.: G05D 23/19

(54) **Thermostat for radiant elements with improved control means.**
Thermostat für Strahlheizkörper mit verbesserten Steuermitteln
Thermostat pour éléments radiants avec des moyens de commande améliorés

(30) Priority: 18.05.2004 IT VI20040119
(43) Date of publication of application: 23.11.2005
(73) Proprietor: 4-Noks S.r.l., 31018 Francenigo di Gaiarine (TV) (IT)
(72) Inventor: Marchetti, Corrado, 31052, VARAGO di MASERADA sul PIAVE (TV) (IT)
(74) Representative: Bonini, Ercole

(56) References cited:
- EP-A- 0 683 446
- EP-A2- 0 717 424
- EP-A2- 1 102 294
- FR-A1- 2 699 871
- US-A- 6 102 749
- US-B1- 6 531 952
- US-B1- 6 641 055

## Description

The present invention relates to a thermostat particularly suited to be applied to fluid radiant elements, more particularly to electric radiators for heating rooms and/or napkins and towels.

It is well-known that in the radiant elements of the above-mentioned kind the circulating carrier fluid is heated by a heating element fed by electric energy.

The heating element is arranged in a housing made in the radiant element and consists of a tubular body internally provided with one or more electric resistors and fixed to the radiant element through a tubular sleeve.

The electric resistance is fed by the electric current of the supply mains and a thermostat, provided with a control circuit and regulating means for the operator, allows to regulate the operating conditions of the radiant element.

More particularly, thermostats are installed in the radiant elements available on the market, allowing the user to regulate both the operating temperature and the operating mode.

More particularly, two control knobs are projecting from the thermostat, the one to set the operating temperature and the other to change the operating mode.

In particular, the latter knob may, for instance, have five positions, each relating to one of the following operating modes:
- a comfort operating mode wherein the actual temperature corresponds to that set by the operator;
- an automatic operating mode wherein the thermostat is actuated by a remote programming and control device;
- an anti-freeze operating mode wherein the temperature never falls below a predetermined minimum value, independently from the set temperature;
- an economy operating mode wherein the actual operating temperature is lower by a prefixed value relative to the set temperature.

For constructional reasons, the thermostat is almost invariably arranged in the lower part of the radiant element and the need to act on two knobs is a problem especially for elderly people who are necessarily obliged to stoop.

Moreover, the presence on the thermostat of two knobs arranged in the lower part of the radiant element makes the execution of the controls more difficult also to short-sighted people who may mistake the two knobs, then carrying out wrong manoeuvres.

Patent US 6,102,749 discloses a thermostat comprising a knob to regulate the temperature and separate switches to change the operating mode.

The present invention aims at overcoming said drawbacks.

More particularly, a first object of the invention is to provide a thermostat for radiant elements wherein the temperature and the operating mode regulating means are combined in a single regulation unit.

Another object is to provide a different actuation way for each of the temperature and operating mode regulating means.

These objects are attained by a thermostat particularly suited to be installed on fluid radiant elements provided with at least a heating element electrically connected to a power supply of electric energy, that comprises:
- a case applied on said radiant element;
- a control circuit arranged inside said case for controlling the operation of said radiant element and comprising a potentiometer suited to change the temperature and a push button suited to change the operating mode, mutually coaxial and both welded and electrically connected to said control circuit;
- regulating means at disposal of the operator, mechanically coupled to said potentiometer and said push button,
wherein said regulation means are combined in a single regulating unit comprising a key mechanically associated to said potentiometer and said push button and a knob coupled to said key, and wherein said knob has a seat housing said key with which a co-axial coupling is carried out along a longitudinal axis, so that the rotation of said knob causes said potentiometer to rotate, and the pressure of said key causes said push button to be pressed.

Advantageously, the presence of a single regulating unit, combining the temperature and the operating mode regulating means, simplifies the regulation work by the user.

In another advantageous way, from an operational point of view the differentiation of the two controls, each providing for a different actuation way, improves the reliability of the regulation because it is more difficult to make mistakes. Still advantageously, such a differentiation of the actuation ways allows correct regulation even by short-sighted people who can perform the regulation even guided by the tactile feeling only.

The above objects and advantages will be better high-lighted by the following description of a preferred embodiment of the thermostat of the invention, given with reference to the accompanying sheets of drawings in which:
- Figure 1 is an exploded view of the application of the thermostat of the invention to a radiant element;
- Figure 2 is an assembled side view of the thermostat of the invention applied to the radiant element of Figure 1;
- Figure 3 shows a detail of the thermostat of the invention with the regulating elements in an exploded view;
- Figure 4 is an assembled front view of the detail shown in Figure 3;
- Figure 5 is a sectional view taken along plane V-V of Figure 4;
- Figure 6 is a sectional view taken along plane VI-VI of Figure 4; and
- Figure 7 is a left-hand side view of Figure 4.

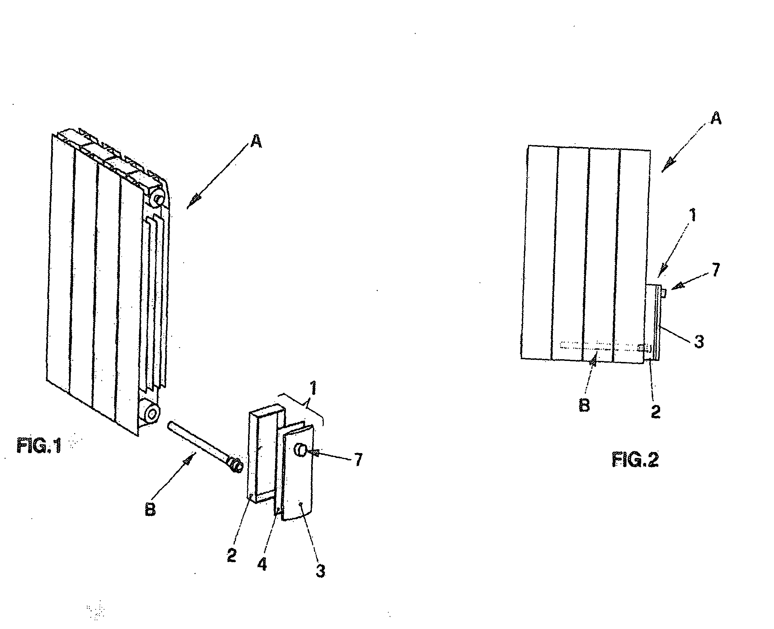

The thermostat of the invention is generally illustrated in Figure 1 and Figure 2, where it is generally indicated with numeral **1,** applied to a radiant element generally indicated with **A,** internally provided with a heating element generally indicated with **B.**

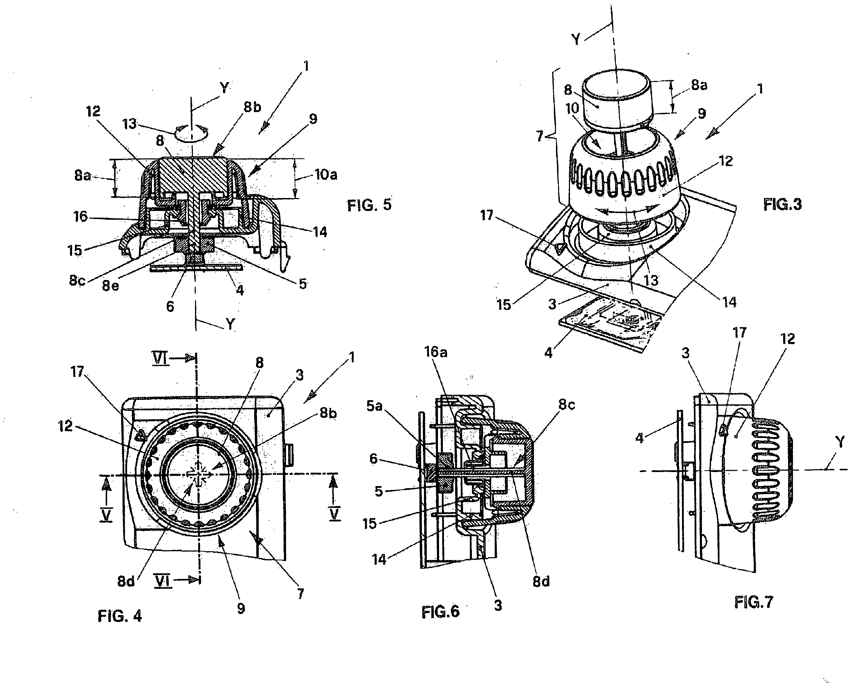

The thermostat **1** is also shown in partial views in figures 3 to 6 where one can see that it comprises a case **2** applied to the radiant element **A** and closed by a lid **3,** inside which a control circuit **4** is arranged for the control of the operating conditions of said radiant element.

It is to be noticed that the thermostat of the invention, even if it is particularly suited to be applied to fluid radiant elements of the kind shown in figures 1 and 2, thus to radiators for heating of rooms, it may also be advantageously applied to radiant elements of other kinds, such as radiators for heating napkins and towels.

Moreover, as to the control circuit **4**, this may be of any kind provided that it has circuit elements suited to control the temperature and the operating mode of the radiant element.

More particularly one can see in Figure 5 that the control circuit **4** comprises a potentiometer **5** electrically connected to the circuit **4,** and a push button **6** coaxially arranged to said potentiometer and also electrically connected to the circuit **4**, arranged between the potentiometer **5** and the circuit **4**.

Regulation means at disposal of the operator are mechanically connected to the potentiometer **5** and the push button **6** to regulate the operating conditions of the radiant element.

According to the invention, the regulating means are combined in a single regulation unit **7** comprising a key **8** mechanically associated to the potentiometer **5** and the push button **6** as well as a knob **9** coaxially coupled to the key **8.**

More particularly, one can see that the knob **9** has a body **12** of a generally truncated-conical shape bevelled at its top, where a seat **10** for the key **8** is made.

Both the key **8** and the seat **10** have a circular section and the height **8a** of the key **8** is substantially equal to the height **10a** of the seat **10** so that, when coupled, the key **8** is entirely contained in the seat **10** obtaining a co-axial coupling along the longitudinal axis **Y.**

The key **8**, as shown in figures 5 and 6, has a cavity **8b** on its outer side suited to make easier the thrust by the user and on the opposite part a projecting peg **8c** turned to the inside of the case **2.**

The projecting peg **8c** is passing through a bushing **16** being part of the knob body **12** and its end is connected to the potentiometer **5** and the push button **6.** One can see from figures 4 to 6 that the projecting peg **8c** has a cross-shaped transversal section **8d** better seen in Figure 4 and is slidingly coupled along the axis **Y** into corresponding holes **16a** and **5a** with a cross-shaped transversal section made in the bushing **16** and in the potentiometer **5**, respectively.

The knob **9** is revolvingly and externally coupled to a ring nut **14** which is made elevated on the lid **3** of the case **2** and defines in its interior an annular body **15** also made elevated on the lid **3** of said case **2,** supporting the bushing **16.**

The projecting peg **8c,** the bushing **16** and the cross-shaped holes **16a** and **5a** are mutually co-axial along the longitudinal axis **Y.**

In practice, to regulate the operating temperature of the radiant element, the operator rotates the knob **9** according to either the clockwise or anti-clockwise direction of the arrow **13,** setting it in a given position with respect to a fixed mark **17** made on the lid **3.**

Upon rotation of the knob **9,** the bushing **16** causes the projecting peg **8c** and consequently also the key **8** to rotate.

Since the end **8e** of the peg **8c** of key **8** is inserted in the cross-shaped hole **5a** of the potentiometer **5** carrying out the temperature regulation, the rotation of the knob **9** allows to regulate the operating temperature of the radiant element.

It is clear that the profiles of the projecting peg **8c** and the relevant holes in which it is coupled, instead of having a cross-shaped transversal section, may have also transversal sections in other shapes provided that they are suited to transfer the torque still allowing an axial sliding along the axis **Y.**

On the outer surface of the body **12** of the knob **9** the temperature reference values will be indicated.

On the contrary, to regulate the operating mode of the radiant element, the operator applies subsequent pressures on the working surface **8b** of key **8** until the operating mode of interest is selected.

Indeed, the sliding coupling between the cross-shaped transversal section **8d** of peg **8** and the corresponding cross-shaped holes **16a** of the bushing **16** and **5a** of the potentiometer **5** allows the key **8** to slide vertically along the axis **Y** thus actuating the push button **6.**

Each time the key **8** is pressed, the displacement of peg **8c** along the axis **Y** transmits a pressure to the push button **6** thus selecting the operating mode of the radiant element.

The return of the key **8** occurs by reaction to the pressure by the elastic means of the push button **6**.

The various operating modes are programmed in a sequential way, each corresponding to a defined number of pressures exerted on the key **8.**

Therefore, for instance, the comfort operating mode may correspond to one pressure only, the automatic operating mode may correspond to two subsequent pressures, the anti-freeze operating mode to three subsequent pressures, and so on.

In view of the foregoing, one can understand that the thermostat of the invention actually attains the intended objects.

More particularly, the fact of having combined into a single regulation unit both the temperature regulating knob and the key for selection of the operating mode simplifies the regulation operations by the user, thus reducing the possibility of making mistakes.

Among other things, the arrangement of the push button inside the knob makes possible the regulation by actuating the knob only by rotation and the key only by pressure.

In this way, possible mistakes are avoided, especially by elderly people or short-sighted persons who can know by the touch the two regulation members. For this purpose, the knob and the key may be made with different materials and more particularly the key may be made by softer and more yielding materials in comparison with the knob that may be made with a rigid material.

It is fully apparent that in the executive stage the key and knob may also be made with different constructional shapes relative to the illustrated form that should be taken as a preferred recommended embodiment only.

## Claims

1. A thermostat (1) particularly suited to be installed on fluid radiant elements (A) provided with at least a heating element (B) electrically connected to a power supply of electric energy, comprising:
- a case (2) applied to said radiant element (A);
- a control circuit (4) inserted in said case (2) to control the operation of said radiant element (A) and comprising a potentiometer (5) suited to change the temperature and a push button (6) suited to change the operating mode, both being electrically connected to said control circuit (4);
- regulating means (7, 8, 9) at disposal of the user mechanically coupled to said potentiometer (5) and said push button (6),
**characterized In that** said potentiometer (5) and said push button (6) are mutually co-axial and are both welded to said control circuit (4), said regulating means are being combined into a single regulation unit (7) comprising a key (8), mechanically associated to said potentiometer (5) and to said push button (6), as well as a knob (9) coupled to said key (8), wherein said knob (9) has a seat (10) housing said key (8) with which a co-axial coupling is carried out along a longitudinal axis (Y), so that the rotation of said knob (9) causes said potentiometer (5) to rotate, and the pressure **of said key (8) causes said push button (6) to be pressed.**

2. The thermostat (1) according to claim 1), **characterized in that** said knob (9) consists of a body (12) of a generally truncated-conical shape in which said seat (10) housing said key (8) is made.

3. The thermostat (1) according to claim 2), **characterized in that** both said seat (10) and said key (8) have a cylindrical shape, the height (10a) of said seat (10) being substantially equal to the height (8a) of said key (8).

4. The thermostat (1) according to claim **2**), **characterized in that** said key (8) has a cavity (8b) turned to the outside and accessible by the operator and on the opposite side a projecting peg (8c) turned to the inside of said case (2).

5. The thermostat (1) according to claim **4**), **characterized in that** said projecting peg (8c) has a cross-shaped transversal section (8d) and is slidingly coupled with and passes through corresponding holes (16a, 5a) with a cross-shaped transversal section, respectively made in a bushing (16) belonging to said knob (9) and in said potentiometer (5).

6. The thermostat (1) according to claim 5), **characterized in that** said projecting peg (8c) has the end (8e) coupled to said potentiometer (5) and in contact with said push button (6).

7. The thermostat (1) according to claim 6), **characterized in that** said knob (9) is revolvingly coupled to a ring nut (14) made in elevation on the lid (3) of said case (2).

8. The thermostat (1) according to claim 7), **characterized in that** said ring nut (14) defines in its interior an annular body (15) made in elevation on said lid (3) of said case (2) inside which said bushing (16) is arranged.

9. The thermostat (1) according to claim **1**), **characterized in that** said push button (6) is arranged between said potentiometer (5) and said control circuit (4).

## Patentansprüche

1. Ein Thermostat (1), besonders geeignet zur Installation an Fluid-Heizkörpern (A) mit wenigstens einem Heizelement (B), das elektrisch mit einem Stromversorgungsgerät verbunden ist, Folgendes umfassend:
- ein an dem besagten Heizkörper (A) befestigtes Gehäuse (2);
- ein in das besagte Gehäuse (2) eingesetzter Steuerkreis (4) zur Kontrolle des Betriebs des besagten Heizkörpers (A), ein Potentiometer (5) umfassend, das geeignet ist, die Temperatur zu ändern, und einen Drucktaster (6), der geeignet ist, die Betriebsweise zu ändern, wobei beide elektrisch mit dem besagten Steuerkreis (4) verbunden sind;
- Reguliermittel (7, 8, 9), die dem Benutzer zur Verfügung stehen und mechanisch mit dem besagten Potentiometer (5) und dem besagten Drucktaster (6) gekuppelt sind,
**dadurch gekennzeichnet, dass** das besagte Potentiometer (5) und der besagte Drucktaster (6) wechselseitig koaxial sind und beide an den besagten Steuerkreis (4) angeschweißt sind, wobei die besagten Reguliermittel zu einer einzigen Regeleinheit (7) zusammengefasst sind, welche eine Taste (8) umfasst, die mechanisch mit dem besagten Potentiometer (5) und mit dem besagten Drucktaster (6) verbunden ist, ebenso wie einen Drehschalter (9), der mit der besagten Taste (8) gekuppelt ist, wobei der besagte Drehschalter (9) einen Sitz (10) aufweist, der die besagte Taste (8) aufnimmt, mit welcher eine koaxiale Kupplung entlang einer Längsachse (Y) ausgeführt wird, so dass die Drehung des besagten Drehschalters (9) die Drehung des besagten Potentiometers (5) verursacht, und der Druck auf die besagte Taste (8) den Druck auf den besagten Drucktaster (6) verursacht.

2. Das Thermostat (1) gemäß Patentanspruch 1), **dadurch gekennzeichnet, dass** der besagte Drehschalter (9) aus einem Körper (12) von im Wesentlichen kegelstumpfförmiger Gestalt besteht, in welchem der besagte Sitz (10) zur Aufnahme der besagten Taste (8) angefertigt ist.

3. Das Thermostat (1) gemäß Patentanspruch 2), **dadurch gekennzeichnet, dass** sowohl der besagte Sitz (10) als auch die besagte Taste (8) Zylinderform aufweisen und die Höhe (10a) des besagten Sitzes (10) im Wesentlichen der Höhe (8a) der besagten Taste (8) entspricht.

4. Das Thermostat (1) gemäß Patentanspruch 2), **dadurch gekennzeichnet, dass** die besagte Taste (8) einen Hohlraum (8b) aufweist, der nach außen gerichtet ist und dem Bediener zugänglich ist, und an der entgegengesetzten Seite einen hervorstehenden Zapfen (8c) aufweist, der in das Innere des besagten Gehäuses (2) gerichtet ist.

5. Das Thermostat (1) gemäß Patentanspruch 4), **dadurch gekennzeichnet, dass** der hervorstehende Zapfen (8c) einen kreuzförmigen Querschnitt (8d) aufweist und gleitend mit entsprechenden Bohrungen (16a, 5a) mit kreuzförmigem Querschnitt gekuppelt ist und diese durchquert, wobei die Bohrungen in einer zum besagten Drehschalter (9) gehörenden Buchse (16) beziehungsweise in dem besagten Potentiometer (5) gefertigt sind.

6. Das Thermostat (1) gemäß Patentanspruch 5), **dadurch gekennzeichnet, dass** der besagte, hervorstehende Zapfen (8c) an seinem Ende (8e) mit dem besagten Potentiometer (5) gekuppelt ist und Kontakt mit dem besagten Drucktaster (6) hat.

7. Das Thermostat (1) gemäß Patentanspruch 6), **dadurch gekennzeichnet, dass** der besagte Drehschalter (9) drehend mit einer Ringmutter (14) gekuppelt ist, die in Relief auf dem Deckel (3) des besagten Gehäuses (2) gefertigt ist.

8. Das Thermostat (1) gemäß Patentanspruch 7), **dadurch gekennzeichnet, dass** die besagte Ringmutter (14) in ihrem Inneren einen ringförmigen Körper (15) definiert, der in Relief auf dem besagten Deckel (3) des besagten Gehäuses (2) gefertigt ist, innerhalb dessen die besagte Buchse (16) positioniert ist.

9. Das Thermostat (1) gemäß Patentanspruch 1), **dadurch gekennzeichnet, dass** sich der besagte Drucktaster (6) zwischen dem besagten Potentiometer (5) und dem besagten Steuerkreis (4) befindet.

## Revendications

1. Un thermostat (1) indiqué en particulier pour être installé sur des éléments radiants à fluide (A) dotés d'au moins un élément chauffant (B) relié électriquement à une ligne d'alimentation d'énergie électrique, comprenant:
- un étui (2) appliqué audit élément radiant (A);
- un circuit de commande (4) inséré dans ledit étui (2) pour le contrôle de l'opération dudit élément radiant (A) et comprenant un potentiomètre (5) indiqué pour changer la température et un bouton-poussoir (6) indiqué pour changer le mode de fonctionnement, les deux étant reliés électriquement audit circuit de commande (4);
- des moyens de réglage (7, 8, 9) à la disposition de l'utilisateur accouplés mécaniquement audit potentiomètre (5) et audit bouton-poussoir (6),
**caractérisé en ce que** ledit potentiomètre (5) et ledit bouton-poussoir (6) sont réciproquement coaxiaux et les deux sont soudés audit circuit de commande (4), lesdits moyens de réglage étant combinés en une unité de réglage unique (7) comprenant une touche (8), associée mécaniquement audit potentiomètre (5) et audit bouton-poussoir (6), ainsi qu'une molette (9) accouplée à ladite touche (8), où ladite molette (9) présente un siège (10) logeant ladite touche (8) avec laquelle réalise un accouplement coaxial le long d'un axe longitudinal (Y), de façon à ce que la rotation de ladite molette (9) fait tourner ledit potentiomètre (5), et la pression de ladite touche (8) fait en sorte que ledit bouton-poussoir (6) soit pressé.

2. Thermostat (1) selon la revendication 1), **caractérisé en ce que** ladite molette (9) se compose d'un corps (12) d'une forme généralement tronconique dans lequel ledit siège (10) logeant ladite touche (8) est créé.

3. Thermostat (1) selon la revendication 2), **caractérisé en ce que** ledit siège (10) et ladite touche (8) ont une forme cylindrique, la hauteur (10a) dudit siège (10) étant essentiellement égale à la hauteur (8a) de ladite touche (8).

4. Thermostat (1) selon la revendication 2), **caractérisé en ce que** ladite touche (8) présente une cavité (8b) tournée vers l'extérieur et accessible par l'opérateur et sur le côté opposé un pieu saillant (8c) tourné vers l'intérieur dudit étui (2).

5. Thermostat (1) selon la revendication 4), **caractérisé en ce que** ledit pieu saillant (8c) présente une section transversale en croix (8d) et est accouplé de manière coulissante et passe à travers des trous correspondants (16a, 5a) avec section transversale en croix, réalisés respectivement dans une douille (16) appartenant à ladite molette (9) et dans ledit potentiomètre (5).

6. Thermostat (1) selon la revendication 5), **caractérisé en ce que** ledit pieu saillant (8c) présente une extrémité (8e) accouplée audit potentiomètre (5) et en contact avec ledit bouton-poussoir (6).

7. Thermostat (1) selon la revendication 6), **caractérisé en ce que** ladite molette (9) est accouplée de manière pivotante à une bague annulaire (14) réalisée en élévation sur le couvercle (3) dudit étui (2).

8. Thermostat (1) selon la revendication 7), **caractérisé en ce que** ladite bague annulaire (14) définit dans son intérieur un corps annulaire (15) réalisé en élévation sur ledit couvercle (3) dudit étui (2) dans lequel ladite douille (16) est disposée.

9. Thermostat (1) selon la revendication 1), **caractérisé en ce que** ledit bouton-poussoir (6) est disposé entre ledit potentiomètre (5) et ledit circuit de commande (4).
